# EUROPEAN PATENT APPLICATION

(11) **EP 2 278 674 A1**
(43) Date of publication of application: **26.01.2011**
(21) Application number: 10164952.3
(22) Date of filing: 04.06.2010
(51) Int. Cl.: H02G 3/08

(54) **Box for electric wirings**

(30) Priority: 21.07.2009 NL 2003253
(71) Applicant: ABB B.V., 6716 AA Ede (NL)
(72) Inventor: Witte, Adriaan Marinus, 3436 HT, Nieuwegein (NL)
(74) Representative: Geurts, Franciscus Antonius

(57) **Abstract**

Box (1) for electric wirings, comprising a bottom wall (33) and a circumferential wall (2) bounding a cavity (3) for electric connections, and considered in the circumferential direction of the circumferential wall (2) and projecting therefrom consecutively a first spout (4) and a second spout (6) for the insertion of an electric wiring line in a first and second direction of insertion, respectively, wherein the first direction of insertion and the second direction of insertion are at an angle to each other, wherein the first spout (4) and the second spout (6) at the distal outer end comprise a first attachment surface (51) and a second attachment surface (52), respectively, wherein between the first spout (4) and the second spout (6) a bridging wall (62) having a third attachment surface (53) extends, wherein by means of adhesion a separate sealing sheet (55) of flexible puncturable material has been arranged on the first, second and third attachment surface (51-53).

## Description

### BACKGROUND OF THE INVENTION

The invention relates to a box for electric wirings, particularly a distribution junction box, according to the preamble of claim 1. Such a distribution junction box is known from applicant's Dutch patent NL 1.034.797.

This known distribution junction box for electric wirings comprises a circumferential wall defining a cavity for electric connections. Via a connection opening at the front side the cavity is accessible for arranging the electric connections. At the opposite side the distribution junction box is provided with a number of spouts extending outwards from the circumferential wall which at their distal outer ends comprise spout openings for the insertion of an electric wiring line for passing the wires through to the cavity.

Such distribution junction boxes are usually placed in concrete floors or ceilings. They can be assembled from prefab elements, such as particularly so-called wideslab flooring parts.

During the prefabrication of the wideslab flooring parts, the distribution junction box can be placed with its large connection opening facing down on the bottom of the shuttering, after which the concrete is poured over it and around it until amply below the spout openings. After placing the wideslab flooring parts in the construction work, concrete is poured onto them to form the concrete floor.

In order to prevent that during pouring concrete, concrete water ends up in the distribution junction box, it desirable that a few of the connection and spout openings are covered. As at least a number of the spout openings to be closed off are positioned separate from each other, closing off each of said spout openings requires an individual covering, for instance a sticker. For production-technical reasons this is not ideal.

It is an object of the invention to provide a distribution junction box with spout openings for the electric wiring lines, which spout openings have been sealed off in a production-technical easy way.

It is an object of the invention to provide a distribution junction box with spout openings for the electric wiring lines, which spout openings are reliably sealed off.

### SUMMARY OF THE INVENTION

The invention provides a box for electric wirings, particularly a distribution junction box, comprising a bottom wall and a circumferential wall bounding a cavity for electric connections, wherein the circumferential wall at a mounting side facing away from the bottom wall bounds a primary opening for arranging the electric connections, and considered in the circumferential direction of the circumferential wall and projecting therefrom consecutively a first spout and a second spout with at the distal outer end a first secondary opening and second secondary opening, respectively, for the insertion of an electric wiring line in a first and second direction of insertion, respectively, for passing wiring through to the cavity, wherein the first direction of insertion and the second direction of insertion with a main component are oriented substantially transverse to the circumferential wall or parallel to the bottom wall and are at an angle to each other, wherein the first spout and the second spout at the distal outer end comprise a first attachment surface and a second attachment surface, respectively, at least partially surrounding the first secondary opening and second secondary opening, respectively, wherein between the first spout and the second spout a bridging wall having a third attachment surface extends, wherein by means of adhesion a separate sealing sheet of flexible puncturable material has been arranged on the first, second and third attachment surface.

The third attachment surface forms a transition between the first and second attachments surface that surround the spout openings. As a result the sealing sheet can be arranged in one production operation in order to seal off the secondary openings of the first and second spout.

In one embodiment the box comprises a third spout projecting from the circumferential wall and at its distal outer end having a third secondary opening for the insertion of an electric wiring line in a third direction of insertion for passing wiring through to the cavity, wherein the third direction of insertion with a main component is oriented substantially transverse to the circumferential wall or parallel to the bottom wall and is oriented substantially parallel to the first direction of insertion, wherein the third spout at the distal outer end comprises a fourth attachment surface which at least partially surrounds the third secondary opening, wherein by means of adhesion a separate sealing sheet of flexible puncturable material has been arranged on the fourth attachment surface. The first and third spout can be used to connect the lines to the box parallel to each other, like a double spout, wherein both its secondary openings have been closed off.

In a simple embodiment the sealing sheet extends as one unity over the first, second, third and preferably the fourth attachment surface.

In one embodiment the first, second, third and preferably the fourth attachment surface is curved.

In one embodiment the first, second, third and preferably the fourth attachment surface extend in circumferential direction at a constant distance with respect to the circumferential wall.

In one embodiment the first, second, third and preferably the fourth attachment surface form an arch having a substantially circular curvature.

Said embodiments have the advantage that the sealing sheet can be arranged by rotating the box during adhering, as a result of which the sealing sheet is successively arranged over the first attachment surface, the third attachments surface and the second attachment surface.

In one embodiment thereof the first, second, third and preferably the fourth attachment surface are adjacent to each other and/or form a continuous attachment surface, which facilitates arranging the sealing sheet by rotating the box.

In one embodiment thereof the first, second, third and preferably the fourth attachment surface form a continuous series of attachment surfaces extending over at least half the secondary openings consecutive in circumferential direction.

In one embodiment the fourth attachment surface smoothly merges into the first attachment surface.

In one embodiment the first and/or second and/or third and preferably the fourth attachment surface have a substantially rectangular contour, which connects to an elongated sealing sheet that can be taken from a supply roll in the form of an elongated web.

In one embodiment the bridging wall extends free from the circumferential wall between the first and second spout.

In one embodiment the bridging wall extends between the distal outer ends of the first and the second spout. Said embodiments provide a direct, short bridging between the first and second attachment surface.

In one embodiment the angle between the first and second direction of insertion is smaller than or equal to 90 degrees, preferably approximately 45 degrees.

An embodiment to be manufactured through injection moulding is manufactured of synthetic material.

In one embodiment the circumferential wall, the spouts and the bridging wall are integrally formed, so that a concrete water-proof unity can be obtained.

In one embodiment the sealing sheet is manufactured of synthetic material, preferably polyethylene.

### SHORT DESCRIPTION OF THE DRAWINGS

The invention will be elucidated on the basis of a number of exemplary embodiments shown in the attached schematic drawings, in which:

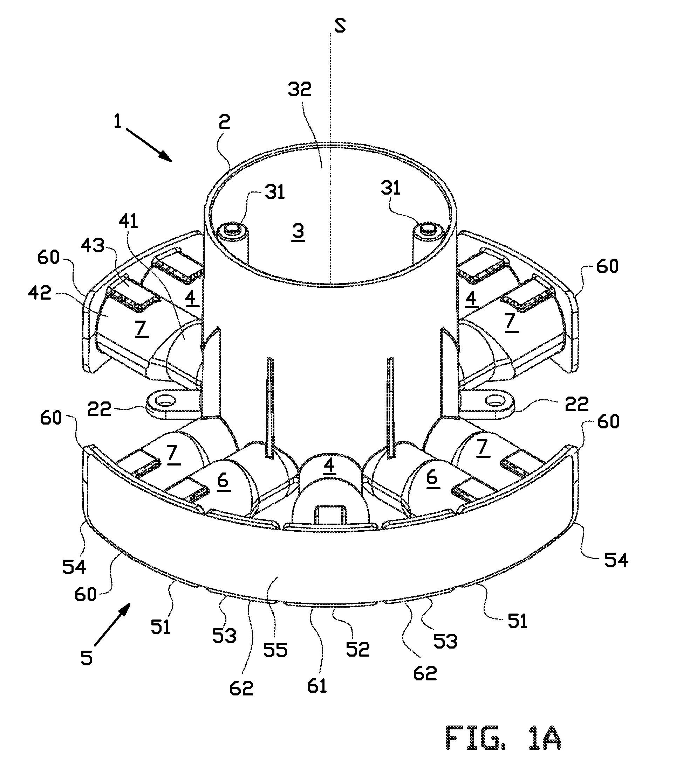

Figure 1A shows an isometric view of a distribution junction box with a sealing sheet according to the invention;

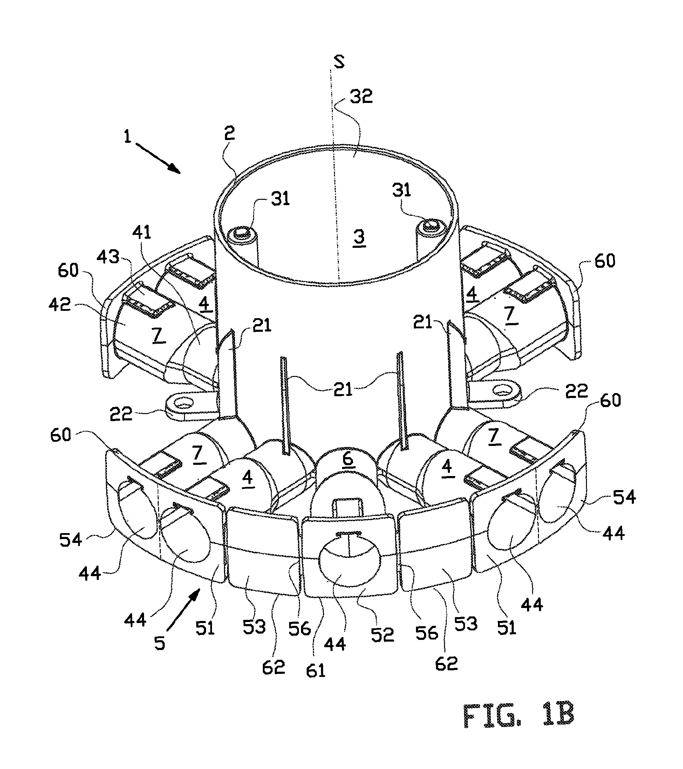

Figure 1B shows the distribution junction box according to 1A, wherein for the sake of illustration the sealing sheet has been left out;

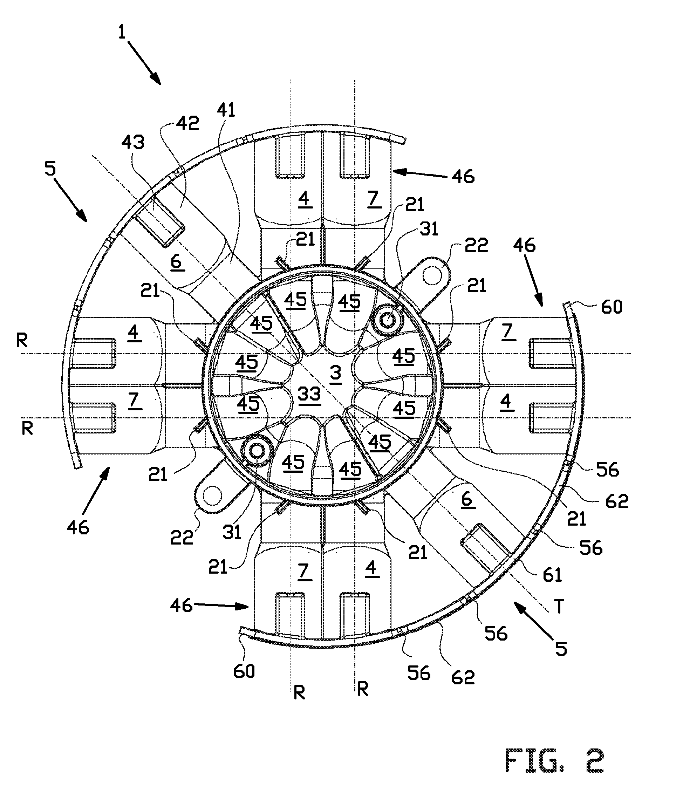

Figure 2 shows a top view of the distribution junction box according to the preceding figures, for the sake of illustration partially provided with the sealing sheet;
Figures 3A-B are side views of the distribution junction box with the sealing sheet according to figures 1A-B, incorporated in a wideslab flooring part.

### DETAILED DESCRIPTION OF THE DRAWINGS

The figures show a distribution junction box 1 for electric wirings, according to an embodiment of the invention.

The distribution junction box 1 is manufactured through injection moulding a synthetic material, and comprises a bottom wall 33 and a straight circle-cylindrical circumferential wall 2 having a centre line S that define a cavity 3 for the accommodation of electric connections. The circumferential wall 2 has a circumferential edge 32 that faces away from the bottom wall 33 and bounds a primary opening or connection opening of the distribution junction box 1. At the inside of the circumferential wall 2 two bushes 31 with internal thread have been provided for building up for instance switch material or a lid. At the outside of the circumferential wall 2 two opposite attachment lips 22 are provided for securing the distribution junction box 1, and several corrugations 21 for fixation of the distribution junction box 1 in for instance an oversized hole.

The distribution junction box 1 comprises several spouts 4, 6, 7 oriented to the outside and distributed all round the circumferential wall, the centre lines R, T of which spouts are situated in a plane perpendicular to the centre line S of the circumferential wall. The centre lines R, T of the spouts 4, 6, 7 therefore are substantially parallel to the bottom wall 33 or with a main directional component oriented substantially transverse to the circumferential wall 2. Per side of the attachment lips 22 there are two first spouts 4 the centre lines R of which are at an angle of 90 degrees, one second spout 6 between the first spouts 4 the centre line T of which is at an angle of 45 degrees to the centre lines R of the first spouts 4, and two third spouts 7 the centre lines R of which extend parallel to the centre lines R of the first spouts 4.

The first, second and third spouts 4, 6, 7 each comprise a straight cylindrical base part 41 which at the side facing away from the circumferential wall 2 by means of a conical widening merges into a wider straight cylindrical insertion part 42, wherein the insertion part 42 at the distal outer end comprises a secondary opening or spout opening 44 for the insertion of an electric wiring line into the spout 4, 6, 7 parallel to the centre line R, T in question. The secondary opening 44 is provided with a recess 43 for accommodation of a locking element (not shown). The first, second and third spouts 4, 6, 7 internally merge into channels 45 that have been formed in the bottom wall 3. The channels 45 are conical in order to lead an introduced draw spring in the direction of the circumferential edge 32.

At their distal side the first and third spouts 4, 7 are provided with a common attachment wall 60 having an elongated rectangular contour. At the distal side the second spouts 6 are provided with a single attachment wall 61 having a rectangular contour. Between the common attachment walls 60 and the single attachment wall 61 bridging walls 62 extend that have a rectangular contour. By means of coupling bridges 56 the bridging walls 62 are only connected to the common attachment wall 60 and the single attachment wall 61. The common attachment walls 60 provide a first and fourth attachment surface 51, 54, respectively (notionally separated by the interrupted lines) that each fully surround the spout opening 44 at that location. The single attachment walls 44 each provide a second attachment surface 52 that fully surrounds the spout opening 44 at that location. The bridging walls 62 each provide a third attachment surface 62 extending between the first and third attachment surface 51, 52. The first, second, third and fourth attachment surfaces 51, 52, 53, 54 form a curved, continuous common attachment surface 5 which over the curvature has a constant distance with respect to the circumferential wall 2.

By means of glue a flexible and puncturable sealing sheet 55 has been adhered to the common attachment surface 5. The sealing sheet 55 used, is made of a material that has a perforation strength and/or point impact strength and/or tensile strength and rupture-tensile strength that is suitable for that purpose. Examples of such materials are the various polyethylenes, such as PE, LDPE, HDPE, LLDPE, polyacrylamides and polyethylenimines, and cellulose-like materials, such as (cationogenous) starch, casein, cellulose resins and cellulose derivatives, and combinations thereof. The sealing sheet 55 will be sufficiently damp-proof. Optionally different polyethyl vinyl alcohols (PVOH) and polyvinyl alcohols can be used for that purpose. Different materials may also be combined into a compound sealing sheet 55, for instance a layer of PE with a layer of PVOH. Further materials that can be suitably combined comprise nylon 6 and nylon 6,6. In general these sealing sheets 55 can easily be provided with an adhesive layer.

An example of a suitable material is paper tape E500 or Q477 available from Stokvis Tapes, of Alblasserdam, the Netherlands. Another suitable material is available from Herald Speciaaldrukkerij of Heumen under the name of Polyethene Extra Permanent. Also suitable is PE gloss white as sticker/label material (in sheets) having an R77 adhesive layer, on a carrier roll of HD 70 white, available from UPM Raflatac.

In the embodiment as shown the first, second, third and fourth attachment surface 51-54 are curved, wherein the common attachment surface 5 is concentrically curved about the circumferential wall 2. At two locations where the third spouts 7 are placed consecutively in circumferential direction, the common attachment surface 5 is interrupted. In another embodiment the common attachment surface 5 can also be continuous, for instance when the distribution junction box 1 is provided with four first spouts 4, placed every other 45 degrees in circumferential direction. All secondary openings 44 of the distribution junction box are covered with two sealing sheets 55.

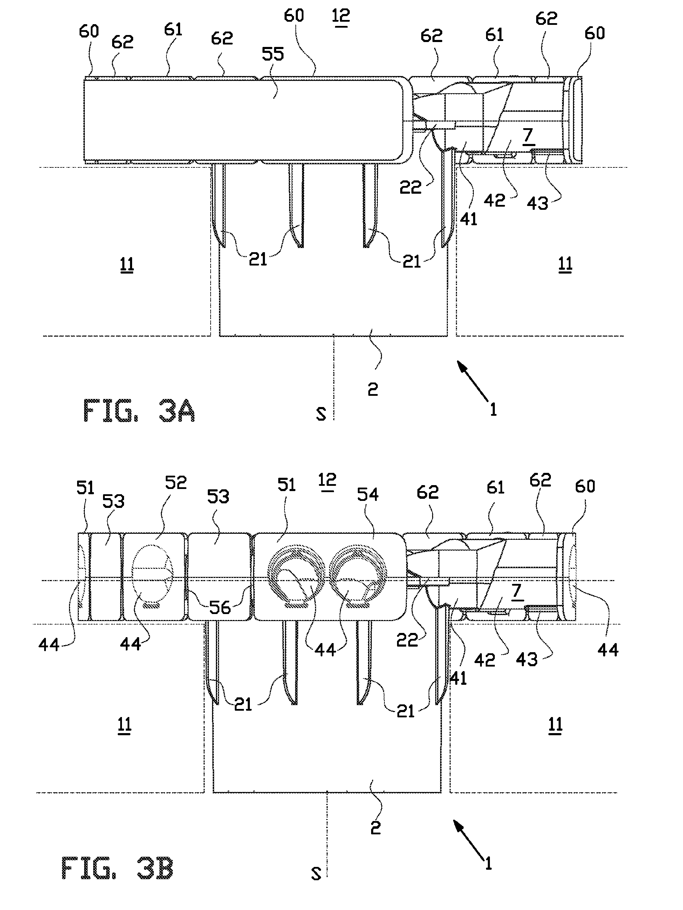

In figure 3 the distribution junction box 1 has been inserted and restrained in a hole in a concrete wideslab flooring part 11, its primary opening facing down. After that lines are inserted into the spouts 4, 6, 7 wherein the sealing sheet 55 closing off the secondary opening 44 of the spout 4, 6, 7 in question, is punctured. In a next stage the space 12 above the distribution junction box 1 is filled with a layer of concrete as a result of which a concrete floor is created in which the distribution junction box 1 and the lines connected thereto are fully incorporated.

The above description is included to illustrate the operation of preferred embodiments of the invention and not to limit the scope of the invention. Starting from the above explanation many variations that fall within the spirit and scope of the present invention will be evident to an expert.

## Claims

1. Box (1) for electric wirings, particularly a distribution junction box, comprising a bottom wall (33) and a circumferential wall (2) bounding a cavity (3) for electric connections, wherein the circumferential wall (2) at a mounting side facing away from the bottom wall (33) bounds a primary opening for arranging the electric connections, and considered in the circumferential direction of the circumferential wall (2) and projecting therefrom consecutively a first spout (4) and a second spout (6) with at the distal outer end a first secondary opening (44) and second secondary opening (44), respectively, for the insertion of an electric wiring line in a first and second direction of insertion, respectively, for passing wiring through to the cavity (3), wherein the first direction of insertion and the second direction of insertion with a main component are oriented substantially transverse to the circumferential wall (2) or parallel to the bottom wall (33) and are at an angle to each other, **characterised in that** the first spout (4) and the second spout (6) at the distal outer end comprise a first attachment surface (51) and a second attachment surface (52), respectively, at least partially surrounding the first secondary opening (44) and second secondary opening (44), respectively, wherein between the first spout (4) and the second spout (6) a bridging wall (62) having a third attachment surface (53) extends, wherein by means of adhesion a separate sealing sheet (55) of flexible puncturable material has been arranged on the first, second and third attachment surface (51-53).

2. Box (1) according to claim 1, comprising a third spout (7) projecting from the circumferential wall (2) and at its distal outer end having a third secondary opening (44) for the insertion of an electric wiring line in a third direction of insertion for passing wiring through to the cavity (3), wherein the third direction of insertion with a main component is oriented substantially transverse to the circumferential wall (2) or parallel to the bottom wall (33) and is oriented substantially parallel to the first direction of insertion, wherein the third spout (7) at the distal outer end comprises a fourth attachment surface (54) which at least partially surrounds the third secondary opening (44), wherein by means of adhesion a separate sealing sheet (55) of flexible puncturable material has been arranged on the fourth attachment surface (54).

3. Box (1) according to claim 1 or 2, wherein the sealing sheet (55) extends as one unity over the first, second, third (51-53) and preferably the fourth attachment surface (54).

4. Box (1) according to any one of the preceding claims, wherein the first, second, third (51-53) and preferably the fourth attachment surface (54) is curved.

5. Box (1) according to any one of the preceding claims, wherein the first, second, third (51-53) and preferably the fourth attachment surface (54) in circumferential direction extend at unchanging distance with respect to the circumferential wall (2).

6. Box (1) according to any one of the preceding claims, wherein the first, second, third (51-53) and preferably the fourth attachment surface (54) form an arch having a substantially circular curvature.

7. Box (1) according to any one of the preceding claims, wherein the first, second, third (51-53) and preferably the fourth attachment surface (54) are adjacent to each other and/or form a continuous attachment surface (60), wherein preferably the first, second, third (51-53) and preferably the fourth attachment surface (54) form a continuous series of attachment surfaces (51-54) extending over at least half the secondary openings (44) consecutive in circumferential direction.

8. Box (1) according to any one of the claims 2-7, wherein the fourth attachment surface (54) smoothly merges into the first attachment surface (51).

9. Box (1) according to any one of the preceding claims, wherein the first and/or second and/or third (51-53) and preferably the fourth attachment surface (54) have a substantially rectangular contour.

10. Box (1) according to any one of the preceding claim, wherein the bridging wall (62) extends free from the circumferential wall (2) between the first and second spout (4, 6).

11. Box (1) according to any one of the preceding claims, wherein the bridging wall (62) extends between the distal outer ends of the first and the second spout (4, 6).

12. Box (1) according to any one of the preceding claims, wherein the angle between the first and second direction of insertion is smaller than or equal to 90 degrees, preferably approximately 45 degrees.

13. Box (1) according to any one of the preceding claims, manufactured of synthetic material.

14. Box (1) according to any one of the preceding claims, wherein the circumferential wall (2), the spouts (4, 6, 7) and the bridging wall (62) are integrally formed.

15. Box (1) for electric wirings according to any one of the preceding claims, wherein the sealing sheet (55) is manufactured of synthetic material, preferably polyethylene.
